Europäisches Patentamt

European Patent Office

Office européen des brevets

(11) Publication number: **0 481 304 A2**

# EUROPEAN PATENT APPLICATION

(21) Application number: **91116944.9**

(22) Date of filing: **04.10.91**

(51) Int. Cl.⁵: **H02M 7/525**, H02M 7/539

(30) Priority: **15.10.90 IT 1252490**

(43) Date of publication of application:
**22.04.92 Bulletin 92/17**

(84) Designated Contracting States:
**DE ES FR GB SE**

(71) Applicant: **ANSALDO S.p.A.**
**Piazza Carignano 2**
**I-16128 Genova(IT)**

(72) Inventor: **Tenconi, Sandro Maria**
**c/o Ansaldo S.p.A., P.zza Carignano 2**
**I-16128 Genova(IT)**

(74) Representative: **Maggioni, Claudio et al**
**Jacobacci-Casetta & Perani Via Visconti di**
**Modrone, 7**
**I-20122 Milano(IT)**

(54) A power circuit for impressed voltage inverters, with (2*n + 1) voltage levels.

(57) The invention has for its subject-matter an impressed voltage inverter power circuit with a higher number of voltage levels than three (in general 2n + 1). This circuit, of the NPC (Neutral Point Clamped) type, can provide a voltage at 2n steps in the zero to plus/minus V range across the "load", through a suitable arrangement of (n) elemental filters (RC) of a resistive capacitive divider and of two series of 2n semiconductor (D,S;D',S') circuits.

Using clamp diodes (DC) and suitable openings and closings of the semiconductor (D,S) circuits acting as switches the voltage load on the semiconductors (D,D') can be brought below the safe operation values of the semiconductors and equal to one n-th of the voltage V, thereby to operate in a reliable range irrespective of the value of V.

Fig 3

This invention relates to a power circuit for impressed voltage inverter with (2*n + 1) voltage levels.

With impressed voltage power inverters, the PWM (Pulse Width Modulation) techniques of modulating the pulse durations have long been used for controlling the value of the fundamental harmonic and obtaining a reduction in higher order harmonics than the first.

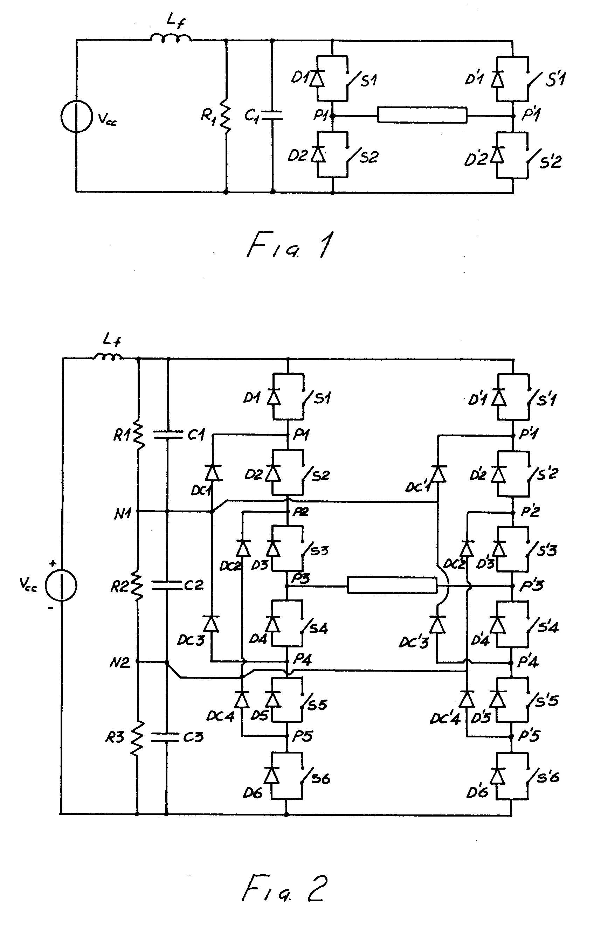

Since the DC voltage source is usually a single one, the traditional PWM technique requires that, on each changeover, the voltage across the load should vary either by a value equal to the DC voltage supply (cf. Figure 1) or twice this value.

This characteristic, while being acceptable with low power or low voltage supply inverters, becomes a problem with high voltage supplies, especially where this requires that the semiconductor components be connected serially.

In fact, changeovers force large voltage steps on the load which are often inacceptable in the instance of sections of the windings of a motor; and the concurrent changeover of several semiconductors in series, specifically controlled turn-off ones (transistors, GTO, IGBT), brings about serious problems which cannot be solved in practice sometimes.

An attempt at obviating these limitations has been made using a number of DC power supplies or using capacitive dividers.

This prior approach is described in detail in Pradeep M. Bhagwat's report entitled GENERALIZED STRUCTURE OF A MULTILEVEL PWM INVERTER published in IEEE TRANSACTIONS ON INDUSTRY APPLICATIONS, Vol. IA-19, No. 6, November/December 1983.

Such arrangements, while solving the first problem, leave the second, i.e. the changeover of a number of components in series, unsolved.

It is only the NPC (Neutral Point Clamped) arrangement proposed by NABAE et al. in 1981, that solves both problems, but it does so with just DC voltage supplies which involve the use of no more than two components in series.

See in this respect the report A NEW NEUTRAL POINT CLAMPED PWM INVERTER, published in IEEE TRANSACTIONS ON INDUSTRY APPLICATIONS, Vol. IA-17, No. 5, September/October 1981.

This actually brings about an upward limitation to the voltage level, on the DC current side, which is on the order of the highest block voltage of the components used (in the instance of the NPC configuration), in view of that, for a number of reasons, a ratio of about two is still required of the highest blockable voltage by the serial components to the voltage rating of the DC current side, namely

1400-1500 V DC with 1400 V transistors,

4000-5000 V DC with 4500 V GTOs,

1200-1400 V DC with 1200 V IGTBs.

The solution provided by this invention removes the above-noted limitations. It is applied to a single DC voltage source having any selected value, and allows of the use of semiconductor components of any types, thereby meeting any numbers of voltage levels to the load.

However, for reasons of circuit complexity, it is contemplated that the value of (n) defining the number of the voltage levels should not be higher than four.

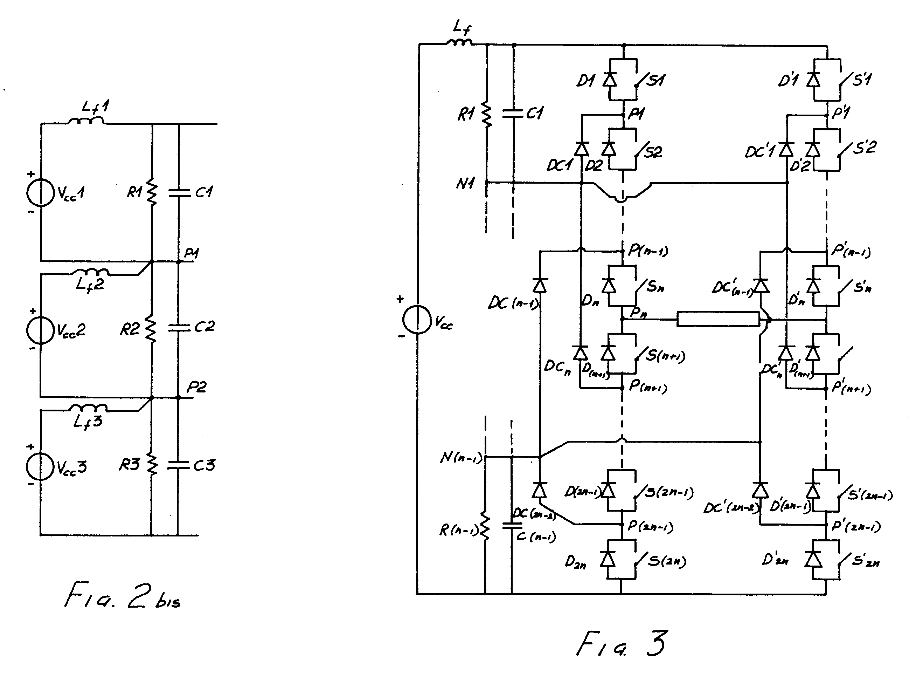

The invention relates to a power circuit for inverter, at an impressed voltage with $2n + 1$ voltage levels, which comprises an input filter with a capacitive resistive divider formed of a series of (n) elemental RC filters provided by the parallel connection of capacitors $C(i)$ and resistors $R(i)$ (see Figure 3, Figure 2 illustrating the example of $n = 3$).

Each i-th elemental filter is connected to the next $(i + 1)$th at connection point $N(i)$.

The power circuit may be either a single-phase or a three-phase one:

where single-phase, it comprises two identical series, each of 2n semiconductor components which are coupled each with a respective diode in antiparallel; said series are indicated at $S(j)$ and $S'(j)$, where "j" may vary between 1 and 2n; the j-th component in each series is connected to the next intermediate point of connection $P(j)$ or $P'(j)$;

where three-phase, it comprises the series $S(j)$, $S'(j)$, and $S''(j)$, respectively, the intermediate points of connection being $P(j)$, $P'(j)$, and $P''(j)$.

The load to be powered is disposed between the central points of connection of each series $P(n)$ and $P'(n)$, where single-phase, and between $P(n)$ and $P''(n)$ where three-phase.

In the three-phase case, the intermediate points $N(i)$ of the dividing filter are connected both to the points $P(i)$ and $P(i + n)$ of the series $S(j)$ via the clamping diodes $DC(i)$ and $DC(i + n + 1)$, respectively, and to the points $P'(i)$ and $P'(i + n)$ of the series $S'(j)$ via the diodes $DC'(i)$ and $DC'(i + n + 1)$, respectively.

In the three-phase case, the points $N(i)$ would be obviously connected to $P''(i)$ and $P''(i + n)$ as well via $DC''(i)$ and $DC''(i + n + 1)$. The central points $P(n)$, $P'(n)$, and $P''(n)$, the last-mentioned one in the three-phase case, would be only connected to the load.

The objects, advantages, and features of this invention will become apparent from the following detailed description, given herein with reference to the accompanying drawings, wherein:

Figure 1 shows a power circuit for impressed voltage single-phase inverter, of a conventional type, already discussed in the introductory part of this specification and no further explained hereinafter;

Figure 2 shows the wiring diagram of a single-phase power circuit having a three filters divider, and hence, seven voltage levels;

Figure 2BIS shows one of the practicable schemes for powering the divider;

Figure 3 is a generalized wiring diagram relating to (2*n + 1) voltage levels; and

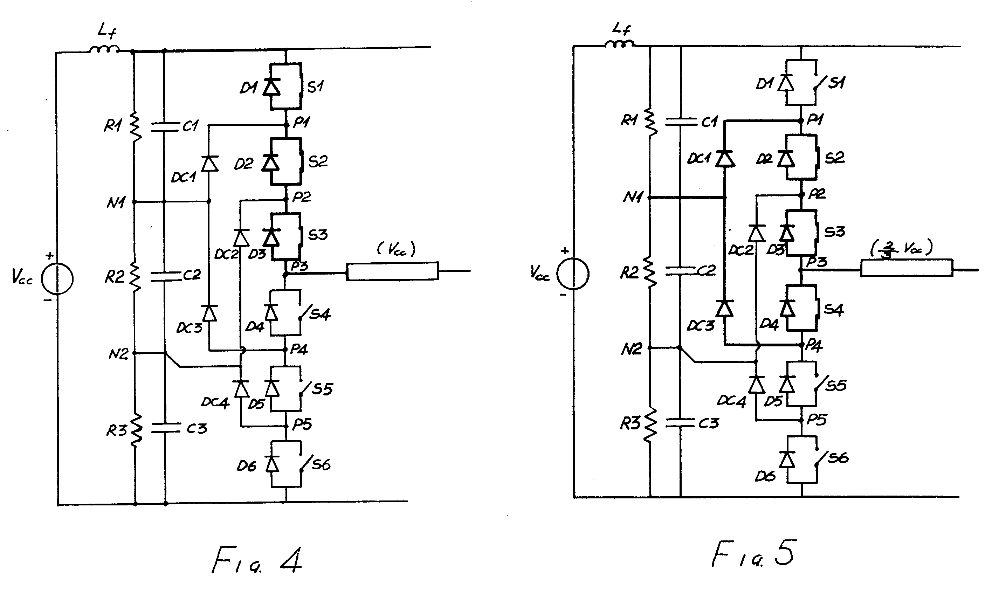

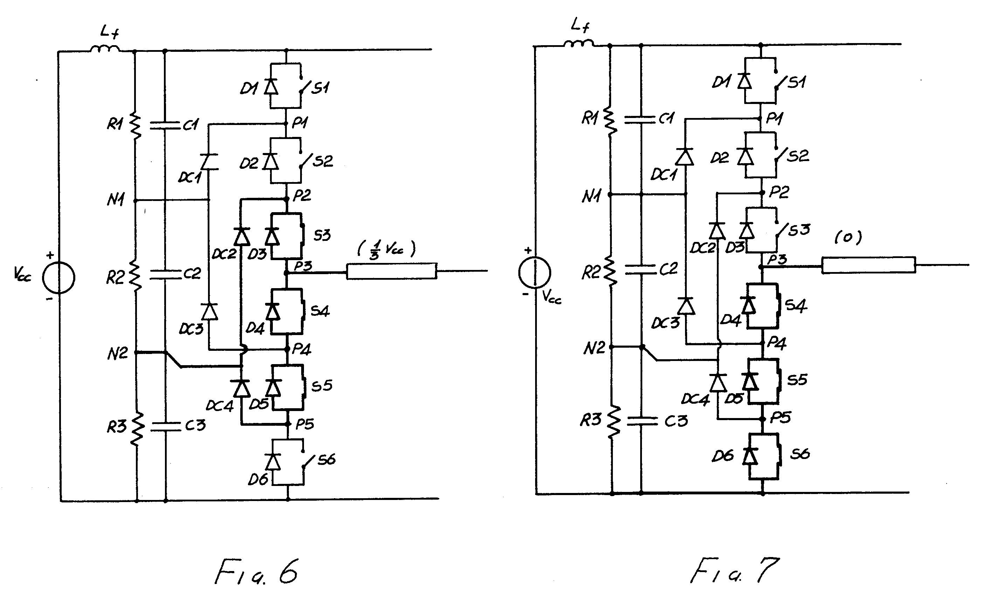

Figures 4 to 7 illustrate schematically four load powering phases in the instance of a wiring diagram of the type shown in Figure 2.

Indicated at Vcc in Figure 2 is a low-impedance DC current source. Shown at Lf is an inductor and at C1, C3, C3 are three serially connected capacitors which are connected by connection points N1 and N2.

Parallel connected to the two poles A and B of the DC source are two series of six semiconductor components as switches S1..... S6, and S'1..... S'6, respectively.

Indicated at P1.....P5 and P'1.....P'5, respectively, are the connection points between contiguous pairs of said semiconductor devices.

The load to be powered is connected between the central connection points of the two series SD, P3, and P'3.

Apart from this pair of intermediate connection points, the remainder of the homolog points of connection are connected to the connection points of capacitors C(i) as follows.

Points P1, respectively P'1, are connected, via the diodes DC1, respectively DC'1, to the first point of connection N1 between the capacitors C.

Likewise, connected to that same point N1, via diodes DC3, respectively DC'3, are the points of connection P4, respectively P'4, the same applying also to points P2, P'2 and P3, P'3.

Described herein below is the power circuit for three-phase applications; its description will make no reference to any devoted figure of the drawings, but may be read in connection with Figure 3 even though the latter relates specifically to single-phase applications.

In the three-phase case, the power circuit comprises three symmetrical series of (2*n) semiconductor components S(1).....S(2n); S'(1).....S'(n); S''(1).....S''(n), respectively, which function as switches.

Said components in each series are connected together at (2*n-1) points of connection P(1).....P(2n-1), P'(1).....P'(2n-1), P''(1).....P''(2n-1), respectively.

The three symmetrical series are arranged in parallel and the three-phase load to be powered is connected to the three central points of connection of each series of 2*n semiconductor components, that is to points P(n), P'(n), and P''(n), respectively.

Similarly to the single-phase embodiment, moreover, the homolog points of connection P(i), P'(i), and P''(i) -- where (i) lies between 1 and n-1 -- are connected in pairs to the connection nodes N(i) of the (n) capacitors C through corresponding diodes DC(i), DC'(i), and DC''(i).

The connection pattern is as follows.

The cathode of DC(i) is connected to P(i), its anode being connected to the cathode of DC(i + n-1) and the node N(i), and the anode of DC(i + n-1) is connected to point P(i + n).

Likewise, the cathode of DC'(i) is connected to P'(i), its anode being connected to N(i) and the cathode of DC'(i + n-1) whose anode is connected, in turn, to P'(i + n).

DC''(i) and DC''(i + n-1) are connected accordingly.

It should be noted that on the node N(i) there converge, therefore, the anodes of DC(i), DC'(i), and DC''-(i), and the cathodes of DC(i + n-1), DC'(i + n-1), and DC''(i + n-1), and that nothing is connected to the central points P(n), P'(n), and P''(n) besides the load.

Finally, the four sequences illustrated by Figures 4 to 7 show that, using a solid state switch, it becomes possible to connect one of the terminals of the load P(3), respectively to the voltage levels Vcc, (2/3)*Vcc, (1/3)*Vcc, and zero.

As may be appreciated from the above-referenced drawing figures, the voltage levels into which the voltage supply is to be divided are obtained, similarly to conventional approaches, through a resistive capacitive divider; the capacitances are selected using the same criteria as in sizing the DC filter of a standard impressed voltage inverter.

Thus, such capacitors serve a dual function: providing a low output impedance for the inverter, and at the same time, providing a static and dynamic division of the voltage across the various components in series.

As mentioned above, the semiconductor is shown by a switch.

The number of switches between the positive pole (A) and the negative pole (B) of the DC source is

EP 0 481 304 A2

twice the number of the capacitors C.

For simplicity in Figure 2 it has been assumed that n = 3 but, as shown in following Figure 3, the claimed structure can be readily extended to include (n) equal to 4, 5, etc., for both single- and three-phase applications.

In order to ensure that each switch is never to sustain a higher voltage than the voltage across each capacitor of the capacitive dividing filter, and hence (apart from variations of minor significance to be discussed hereinafter) equal to Vcc/n, with (n + 1) equal to the number of the practicable voltage levels, it becomes necessary to have recourse to the clamp diodes indicated at DC(i), DC'(i), respectively DC(i + n-1), DC'(i + n-1).

These diodes serve the function of clamping the electrodes of the open switches to the capacitive dividing filter.

Figure 3 illustrates, as mentioned hereinabove, a device according to the invention which comprises (n) elements and provides for (n + 1) voltage levels.

In this case in order to obtain voltage levels 0, Vcc/n, 2*Vcc/n......(n-1)*Vcc/n, Vcc, the switches should be controlled to either close (ON) or open (OFF) as indicated in Table 1 below.

Actually, the control of switch S(i) and that of switch S(n + 1) should oppositely set, i.e. one in the ON position and the other in the OFF, and vice versa.

In this way, the voltage across each switch will not exceed the value Vcc/n, obviously if the switching overvoltages are neglected.

## TABLE 1

| Output voltage | No. pointer of switches | | | | | | | | | |
|---|---|---|---|---|---|---|---|---|---|---|
| | 1 | 2 | ... | n-1 | n | n+1 | n+3 | ... | 2n-1 | 2n |
| Vcc | ON | ON | ... | ON | ON | OFF | OFF | ... | OFF | OFF |
| (n-1)Vcc/n | OFF | ON | ... | ON | ON | ON | OFF | ... | OFF | OFF |
| ... | ... | .. | ... | .. | .. | ... | ... | ... | ... | ... |
| 2Vcc/n | OFF | OFF | ... | ON | ON | ON | ON | ... | OFF | OFF |
| Vcc/n | OFF | OFF | ... | OFF | ON | ON | ON | ... | ON | OFF |
| 0 | OFF | OFF | ... | OFF | OFF | ON | ON | ... | ON | ON |

Where the inverter supplies current to the load from voltage levels other than the extreme ones, i.e. with the changeover poles connected to any of the intermediate points of the divider, unless special measures are taken, the divider will tend to become unbalanced.

A first viable measure is that of supplying each voltage level through a number of voltage sources connected serially to one another and also connected to the respective nodes N(i), in accordance with Figure 2BIS. Should this be unfeasible, a second expedient can be resorted to which consists of having the currents flowing through the output legs (i) of the divider null on the average.

This may be accomplished in view of that the linked output voltages from the inverter can be synthesized in more than one way; specifically, with a single-phase inverter having a divider at (n) levels, the available ways of obtaining the various voltages are as follows:

4

| Voltage | No. of available ways |
|---|---|
| plus/minus Vcc | 1 |
| plus (n-1)*Vcc/n | 2 |
| plus (n-2)*Vcc/n | 3 |
| ..... | ... |
| plus 2*Vcc/n | n-1 |
| plus Vcc/n | n |
| 0 | n + 1 |

Accordingly, since the intermediate voltages can be obtained by means of plural configurations, the configurations will be picked up each time that enable the divider to be brought back to balance. By this expedient, a null average value can be maintained for the current in each leg (i) of the divider within few cycles of the triangular carrier which generates the PWM, or at least the divider unbalance can be drastically limited.

While for clarity of illustration this invention is based on what has been described in the foregoing and shown in the drawings, many modifications and changes may be applicable to the implementation of the inventive concept; however, such modifications and changes are intended to be encompassed by the appended claims.

## Claims

1. A power circuit for impressed voltage inverter with (2*n + 1) voltage levels, being of a type which comprises a capacitive resistive divider formed by a series of (n) RC elemental filters provided by parallel interconnection of resistors R(1).....R(n) and capacitors C(1).....C(n), connected together at (n-1) points of connection N(1).....N(n-1), characterized in that it comprises at least two symmetrical series of (2*n) semiconductor components S(1).....S(2*n), respectively S'(1).....S'(2*n), each coupled in antiparallel to a respective diode D(1).....D(n), respectively D'(1).....D'(n), functioning as switches, said semiconductor components in each series being connected together at (2*n-1) points of connection P(1).....P(2*n-1), respectively P'(1) P'(2*n-1), said two symmetrical series being arranged in parallel; wherein a load to be powered is disposed between the intermediate points of connection P(n) and P'(n) of the two series of (2*n) semiconductor components; and wherein the homolog points of connection P(i) and P'(i), with (i) lying between 1 and (n-1), are connected, by means of corresponding diodes DC(i), respectively DC'(i), to the points of connection N(k) of the (n) capacitors C(i), with (k) lying between 1 and n-1; and wherein connected to these same points of connection N(k), through diodes DC(r), respectively DC'(r), with (r) lying between (n) and (n-2), are the homolog points of connection P(j), respectively P'(j), with (j) lying between (n + 1) and (2*n-1).

2. A power circuit for impressed voltage inverter with (2*n + 1) voltage levels, according to Claim 1, characterized in that, when applied to a single-phase circuit, it comprises two symmetrical series of (2*n) semiconductor components S(1).....S(2*n), respectively S'(1).....S'(2*n).

3. A power circuit for impressed voltage inverter with (2*n + 1) voltage levels, according to Claim 1, characterized in that, when applied to a three-phase circuit, it comprises three symmetrical series of (2*n) semiconductor components S(1).....S(2*n), S'(1).....S'(2*n), S''(1).....S''(2*n).

4. A power circuit for impressed voltage inverter with (2*n + 1) voltage levels, according to the preceding claims, substantially embodied and applied as herein described.

Fig. 1

Fig. 2

6

EP 0 481 304 A2

Fig. 2 bis

Fig. 3

Fig. 5

Fig. 4

Fig. 7

Fig. 6